# EUROPEAN PATENT SPECIFICATION

(11) **EP 3 081 392 B1**
(45) Date of publication and mention of the grant of the patent: **06.09.2017**
(21) Application number: 14870454.7
(22) Date of filing: 03.07.2014
(51) Int. Cl.: B60C 5/00, B60C 11/04, B60C 11/13, B60C 11/03, B60C 11/12

(54) **TIRE**
REIFEN
PNEU

(30) Priority: 12.12.2013 JP 2013257269
(43) Date of publication of application: 19.10.2016
(73) Proprietor: Bridgestone Corporation, Tokyo 104-8340 (JP)
(72) Inventor: HAYASHI Shintaro, Kodaira-shi Tokyo 187-0031 (JP)
(74) Representative: Oxley, Robin John George
(86) International application number: PCT/JP2014/067828
(87) International publication number: WO 2015/087572

(56) References cited:
- EP-A1- 1 964 691
- EP-A1- 2 554 402
- WO-A1-2007/114430
- WO-A1-2009/034912
- JP-A- 2007 168 597
- JP-A- 2007 269 144
- JP-A- 2008 207 610
- JP-A- 2012 240 453
- JP-A- 2013 233 822

## Description

### TECHNICAL FIELD

The present invention relates to a tire, and specifically, to a tire in which a tread pattern is improved.

### BACKGROUND ART

In a tire in which a tread portion comprises a tread pattern including a circumferential main groove extending in the tire circumferential direction, a resonance sound caused by the circumferential main groove is produced accompanying loaded rotation. Such a resonance sound is produced when an air column existing in a space formed by a circumferential main groove and a road surface within a contact surface resonates at a frequency in accordance with the length thereof.

Such an air column resonance sound accounts for majority of noises caused by tires. In recent years, as a demand for reducing noises produced when a vehicle travels is ever-increasing, a measure to inhibit such an air column resonance sound as soon as possible is desired.

In order to inhibit such an air column resonance, reduction of the groove volume of the circumferential main groove is effective. However, when the groove volume of the circumferential main groove is reduced, there is a problem in that the drainage performance, and consequently the wet performance of a tire is deteriorated. In order to deal with such a problem, for example, Patent Document 1 discloses a tire in which noises, among others, air column resonance sounds produced by the tire are effectively reduced by forming, with respect to a circumferential groove, a plurality of lateral grooves whose one end is opened to the circumferential groove and whose other end ends within a land portion, being independent from other circumferential groove and other lateral grooves which is opened to a tread grounding edge under prescribed conditions.

### RELATED ART DOCUMENT

### PATENT DOCUMENT

Patent Document 1: Japanese Unexamined Patent Application Publication No. 2007-168597 (Japanese Patent No. 4925660)

A tire which is capable of effectively suppressing columnar resonance noise is further known from EP1964691 A1.

### SUMMARY OF THE INVENTION

### PROBLEMS TO BE SOLVED BY THE INVENTION

According to techniques disclosed in Patent Document 1, an excellent wear resistance of a tread can be secured by providing a lateral groove which is opened to a circumferential main groove to thereby reduce an air column resonance of the circumferential main groove and at the same time by providing a sipe. However, when a lateral groove is arranged on each of every land portions in an attempt to reduce all of the air column resonance of the circumferential main groove, the pattern rigidity reduces as a whole, resulting in an insufficient wear performance in some cases. Therefore, a tread pattern whose wear performance is further improved without compromising a noise-reducing effect is demanded to be realized, and in particular, a tread pattern which can endure even when it is applied to a relatively high load vehicle such as an RV vehicle is desired.

Accordingly, an object of the present invention is to provide a tire whose silent performance is excellent and at the same time whose wear performance is also excellent.

### MEANS FOR SOLVING THE PROBLEMS

The present inventor intensively studied to find that the above-mentioned problems can be resolved by employing constitution mentioned below, thereby completing the present invention.

In other words, the present invention relates to a tire comprising, on a tread portion, three circumferential main grooves composed of an outer circumferential main groove positioned on the outermost side when installed in a vehicle, an inner circumferential main groove positioned on the innermost side when installed in a vehicle, and a middle circumferential main groove positioned therebetween, wherein
an outer middle land portion is defined by the middle circumferential main groove and the outer circumferential main groove, an inner middle land portion is defined by the middle circumferential main groove and the inner circumferential main groove, and the outer middle land portion is formed bridging across the tire equatorial plane,
the outer middle land portion comprises an outer resonator composed of a first sub groove both ends of which terminate within the land portion, a first branch groove which extends from one end of the first sub groove to the outer circumferential main groove and whose groove width is smaller than that of the first sub groove, and a second branch groove which extends from the other end of the first sub groove to the middle circumferential main groove and whose groove width is smaller than that of the first sub groove,
the inner middle land portion comprises a second sub groove whose one end terminates within the land portion, wherein the other end of the second sub groove is directly communicated with the inner circumferential main groove or is communicated with the inner circumferential main groove via a third branch groove whose groove width is smaller than that of the second sub groove to form an inner resonator, and
the length of the outer resonator in the tire circumferential direction is larger than the length of the inner resonator in the tire circumferential direction.

In the tire of the present invention, preferably, the inner middle land portion comprises a first thin groove which extend from the middle circumferential main groove and terminates within the land portion, and the groove depth of the first thin groove at the opening thereof to the middle circumferential main groove is shallower than the maximum groove depth thereof. In the tire of the present invention, preferably, the outer middle land portion comprises a second thin groove which extends from the middle circumferential main groove and terminates within the land portion, and the groove depth of the second thin groove at the opening thereof to the middle circumferential main groove is shallower than the maximum groove depth thereof. Further, in the tire of the present invention, preferably, regarding each of the outer resonator and the inner resonator, adjacent resonators in the tire circumferential direction comprise an overlapping portion in the tire circumferential direction.

Still further, in the tire of the present invention, preferably, the outer middle land portion comprises a third thin groove which extends from the outer circumferential main groove and terminates within the land portion, and the groove depth of the third thin groove at the opening thereof to the outer circumferential main groove is shallower than the maximum groove depth thereof. Still further, in the tire of the present invention, preferably, the groove depth of each of the first sub groove and the second sub groove at a communication portion where each branch groove communicates is shallower than the maximum groove depth thereof. Still further, in the tire of the present invention, preferably, the first sub groove and the second sub groove extend inclined with respect to the tire circumferential direction, and preferably, the groove depth of the first sub groove at a middle portion thereof along the extending direction is shallower than the maximum groove depth thereof.

The term "tread portion" herein refers to a surface region of a tread rubber to be in contact with a flat plate when a tire is mounted on a rim to be applied and the tire is inflated to the maximum air pressure and placed perpendicularly on the flat plate and then a mass corresponding to the maximum load capacity is loaded thereonto.

The term a "rim to be applied" refers to a rim defined in accordance with the standard below, the term a "maximum air pressure" refers to an air pressure defined in accordance with a maximum load capacity in the standard below, and the term a "maximum load capacity" refers to a maximum mass which is allowed to be loaded on a tire in the standard below.

The above-mentioned standard is an industrial standard which is effective for the region where a tire is manufactured or used. Examples thereof include YEAR BOOK published by THE TIRE AND RIM ASSOCIATION INC. in the United States, STANDARDS MANUAL published by The European Tyre and Rim Technical Organization in Europe, and JATMA YEAR BOOK published by THE Japan Automobile Tyre Manufacturers Association, Inc. in Japan.

### EFFECTS OF THE INVENTION

According to the present invention, by arranging two series of resonators bridging across two circumferential main grooves of three circumferential main grooves, air column resonance in two circumferential main grooves can be inhibited by one resonator, and thus air column resonance reduction can be attained while inhibiting rigidity deterioration by reducing the number of resonators, and as the result, a tire having a more excellent wear performance as well as a more excellent silent performance compared with a conventional tire can be attained. The tire of the present invention has an excellent wear performance and silent performance to such a degree that the tire can endure even when it is applied to a relatively high load vehicle such as an RV vehicle such as a minivan.

### BRIEF DESCRIPTION OF THE DRAWINGS

Fig. 1 is a partial exploded view illustrating a tread portion of one example of a tire of the present invention.
Fig. 2 is an explanatory view illustrating an example of a second sub groove in another form.

### MODE FOR CARRYING OUT THE INVENTION

Embodiments of the present invention will be described with reference to the Drawings.

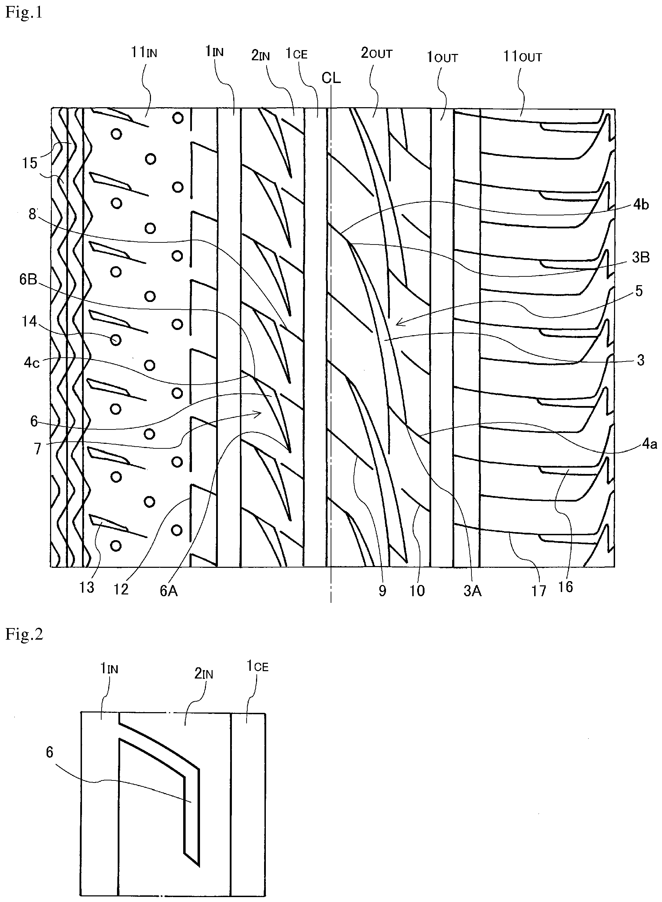

Fig. 1 is a partial exploded view illustrating a tread portion of one example of a tire of the present invention. In Fig. 1, the outside when a tire is installed in a vehicle is on the right, and the inside when a tire is installed in a vehicle is on the left. As illustrated, the tire of the present invention has a directional pattern in which the direction of the tire with respect to a vehicle is designated.

The illustrated tire of the present invention comprises, on a tread portion, three circumferential main grooves 1_{OUT}, 1_{IN}, and 1_{CE} composed of an outer circumferential main groove 1_{OUT} positioned on the outermost side when installed in a vehicle, an inner circumferential main groove 1_{IN} positioned on the innermost side when installed in a vehicle, and a middle circumferential main groove positioned therebetween 1_{CE}. An outer middle land portion 2_{OUT} is defined by the middle circumferential main groove 1_{CE} and the outer circumferential main groove 1_{OUT}, and an inner middle land portion 2_{IN} is defined by the middle circumferential main groove 1_{CE} and the inner circumferential main groove 1_{IN}. Among these, the outer middle land portion 2_{OUT} has a larger land portion width than that of the inner middle land portion 2_{IN}, and is formed bridging across a tire equatorial plane CL. In other words, in the tire of the present invention, the land portion width of the outer middle land portion 2_{OUT} is large and thus the outer middle land portion 2_{OUT} is extended over the tire equatorial plane CL. Since a groove is not arranged on the tire equatorial plane, the rigidity at the vicinity of a middle of a pattern can be increased, thereby improving the wear performance at this portion. Since the grounding length of a tire is the largest at the tire equatorial plane, when the tire equatorial plane corresponds to the circumferential main groove, the rigidity at the vicinity of the circumferential main groove decreases, and thus the grounding length at the tire equatorial plane further extends, whereby the grounding shape is likely to deteriorate. However, in the present invention, such deterioration of a ground shape can be prevented.

In the tire of the present invention, on the outer middle land portion 2_{OUT}, an outer resonator 5 composed of a first sub groove 3 both ends of which terminate within the land portion, a first branch groove 4a which extends from an end 3A of the first sub groove 3 to the outer circumferential main groove 1_{OUT} and whose groove width is smaller than that of the first sub groove 3, and a second branch groove 4b which extends from an other end 3B of the first sub groove 3 to the middle circumferential main groove 1_{CE} and whose groove width is smaller than that of the first sub groove 3 is provided. By providing the outer resonator 5 comprising branch grooves 4a, 4b each being communicated with two circumferential main grooves of the outer circumferential main groove 1_{OUT} and the inner circumferential main groove 1_{CE} on the outer middle land portion 2_{OUT} whose land portion width is larger than that of the inner middle land portion 2_{IN}, an effect of reducing air column resonance produced at these two circumferential main grooves by the outer resonator 5 at one position can be obtained.

In the tire of the present invention, the inner middle land portion 2_{IN} is provided with a second sub groove 6 whose one end 6A terminates within the land portion. An other end 6B of the second sub groove 6 is communicated with the inner circumferential main groove 1_{IN} via a third branch groove 4c whose groove width is smaller than that of the second sub groove 6 to form an inner resonator 7. By providing the inner middle land portion 2_{IN} with the inner resonator 7 which is communicated with the inner circumferential main groove 1_{IN}, air column resonance produced at the inner circumferential main groove 1_{IN} can be reduced. The other end 6B of the second sub groove 6 may be communicated with the inner circumferential main groove 1_{IN} via the third branch groove 4c as illustrated in Fig. 1, or may alternatively be directly communicated with the inner circumferential main groove 1_{IN} as illustrated in Fig. 2.

In the present invention, by providing each of the outer middle land portion 2_{OUT} and the inner middle land portion 2_{IN} with a resonator, air column resonance can be reduced for all the three circumferential main grooves, thereby obtaining a silent effect. On the other hand, since a similar silent effect can be obtained without providing the same number of resonators as the number of main grooves in a conventional art, deterioration of rigidity can be inhibited compared with a conventional art.

Further, in the present invention, as illustrated, the length of the outer resonator 5 in the tire circumferential direction needs to be larger than the length of the inner resonator 7 in the tire circumferential direction. The term "the length of a resonator in the tire circumferential direction" herein refers to the length measured along the tire circumferential direction with respect to a sub groove portion which constitutes the resonator excluding a branch groove portion. By setting the length of the outer resonator 5 in the tire circumferential direction to be large, the number of the second branch grooves 4b opened to the middle circumferential main groove 1_{CE} can be made relatively small, and therefore, the rigidity at the vicinity of the tire equatorial plane is hardly deteriorated. As illustrated, by forming the outer middle land portion 2_{OUT} to have a width larger than that of the inner middle land portion 2_{IN}, the rigidity of the outer middle land portion 2_{OUT} can be appropriately maintained even when the outer resonator 5 which is larger than the inner resonator 7 is arranged, and thus an influence on the wear performance is little. Further, since a grounding area at the time when a vehicle turns can be earned when the land portion width of the outer middle land portion 2_{OUT} is set to be large, an advantage that the steering stability at the time when a vehicle turns can be maintained at a high level even in a vehicle with a high center of gravity and a high load in which a load at the grounding surface on the outside when installed in the vehicle is high during the cornering or the like can be obtained.

The specific structures of the outer resonator 5 and the inner resonator 7 in the present invention can be constituted in accordance with a known technique. The frequency range in which a silencing effect can be obtained by a resonator is determined by the volume ratio of branch grooves and sub grooves, and on the other hand, the frequency a resonance sound caused by a circumferential main groove varies depending on the travelling speed or the size of a tire. Therefore, a desired reducing effect of a resonance sound can be obtained by adjusting the volume ratio of branch grooves and sub grooves in accordance with the frequency of a noise which is desired to be reduced. Any of the first sub groove 3 and the second sub groove 6 which constitute the outer resonator 5 and the inner resonator 7 respectively are formed to have a groove width such that both walls of each groove are not in contact with each other in a grounding surface when a tire is mounted on a rim to be applied and inflated to the maximum air pressure and at the same time and the tire is in a posture in which a mass corresponding to the maximum load capacity is loaded. Further, the first sub grooves 3 and second sub grooves 6 are arranged in a mode in which one or more of them are always included in the grounding surface.

Regarding the first sub groove 3 and the second sub groove 6, preferably the extending length of the sub groove portion where the groove width is 30% or larger of the groove width of the corresponding circumferential main groove is 40% or larger of the extending length the circumferential main groove in the grounding surface. When each sub groove is provided with a prescribed percentage of a portion where the groove width is 30% or larger of the groove width of the corresponding circumferential main groove, a resonator in which the groove volume is sufficiently secured and a sufficient sound absorbing effect can be exhibited can be obtained. Here, "the extending length of a groove" refers to the length of a groove measured along the extending direction of the groove at the center in the width direction of the groove.

In the present invention, the outer middle land portion 2_{OUT} is formed bridging across the tire equatorial plane CL, and preferably a second branch groove 4b of the outer resonator 5 whose groove width is relatively small is arranged on a portion of the outer middle land portion 2_{OUT} bridging across the tire equatorial plane CL. The rigidity at the vicinity of the tire equatorial plane CL can be maintained still higher, and the wear performance can be improved to a sufficient level even in a high load vehicle such as an RV vehicle or the like.

In the present invention, regarding each of the outer resonator 5 and the inner resonator 7, preferably adjacent resonators in the tire circumferential direction comprises an overlapping portion in the tire circumferential direction. Herein, "resonators are overlapped with each other" means that sub grooves each constituting a resonator are overlapped with each other. By this, the circumferential direction rigidity can be made uniform without generating a portion where the rigidity is high or low, in other words, without generating a rigidity difference, thereby reducing an influence on the silent performance, the partial wear, or the like. In general, a reducing effect of a noise by a resonator is determined by the volume of a sub groove portion, and the larger the volume the larger the silencing effect. However, since, when the sub groove is made too large, the rigidity of a pattern is deteriorated and at the same time the grounding area is made small, the steering stability and the wear performance are deteriorated. In the present invention, from the standpoint of securing the volume of such a sub groove and securing the rigidity of a pattern at the same time, sub grooves each substantially having a triangle shape as illustrated are arranged overlapped with each other in the tire circumferential direction. When each of the first sub groove 3 and the second sub groove 6 is formed in a substantially triangle shape in which the groove width becomes narrower toward one end in the tire circumferential direction as mentioned above, it is easy to arrange resonators overlapped with each other in the tire circumferential direction. The sub groove is made substantially in a shape of a triangle because the rigidity at the overlapping portion is less likely to be deteriorated compared with cases where the sub groove is made substantially in a shape of a rectangle.

In the present invention, preferably, the groove depth of each of the first sub groove 3 and the second sub groove 6 is shallower than the maximum groove depth at a communication portion where each of the branch grooves 4a, 4b, 4c are communicated. By making the groove depth of a communication portion of each sub groove with each branch groove shallow, the communication portion where the rigidity becomes locally low is reinforced, thereby making the rigidity uniform and preventing partial wear.

Further, preferably, the first sub groove 3 and the second sub groove 6 extend inclined with respect to the tire circumferential direction. When a sub groove extends along the tire circumferential direction, the rigidity in the lateral direction of the tire is deteriorated, thereby adversely influencing the turning performance; however, by arranging the sub groove inclined with respect to the tire circumferential direction, the turning performance is also maintained at a high level. The inclination angles of the first sub groove 3 and the second sub groove 6 with respect to the tire circumferential direction in this case are not particularly restricted, and suitably in a range from 20 to 45 degrees. "The inclination angle of a sub groove with respect to the tire circumferential direction" refers to the angle formed by a straight line connecting both ends in the tire circumferential direction of the sub groove with respect to the tire circumferential direction.

Still further, preferably, the first sub groove 3 comprises a portion where the groove depth is shallower than the maximum groove depth also at a middle portion in the extending direction. Since the first sub groove 3 constitutes the outer resonator 5 which is relatively long in the tire circumferential direction, the rigidity may be locally deteriorated when the groove depth is made large throughout the whole groove; however, when the groove depth is shallow at a middle portion along the extending direction, the rigidity is appropriately secured, which is preferred. On the other hand, the groove depth of the second sub groove 6 relatively deepens at a middle portion along the extending direction, and is shallow at both ends thereof.

The inner middle land portion 2_{IN} may be provided with a first thin groove (sipe) 8 which extends from the middle circumferential main groove 1_{CE} and terminates within the land portion, in addition to the inner resonator 7. When the land portion has a rib shape continuing in the tire circumferential direction, the grounding pressure is relatively high; when the inner middle land portion 2_{IN} is provided with a first thin groove 8 and the inner middle land portion 2_{IN} is substantially partitioned into block shapes by the first thin groove 8 and the inner resonator 7, the grounding pressure can be reduced. By this, the rigidity of the inner middle land portion 2_{IN} is optimized and the wear performance can be further improved. By reducing the block rigidity moderately, an effect of inhibiting deterioration of riding comfort or deterioration of tire noise. Accordingly, as illustrated, the first thin groove 8 is suitably arranged at a position such that the first thin groove 8 together with the inner resonator 7 substantially partition the inner middle land portion 2_{IN}.

The groove width of the first thin groove 8 is suitably 1.5 mm or smaller. The groove depth of the first thin groove 8 at the opening to the middle circumferential main groove 1_{CE} is preferably shallower than the maximum groove depth. By making the groove depth of the first thin groove 8 at the opening with respect to the middle circumferential main groove 1_{CE} shallow, the opening whose rigidity is likely to be low is reinforced, whereby the rigidity can be uniform and partial wear can be inhibited.

The outer middle land portion 2_{OUT} may be provided with a second thin groove (sipe) 9 which extends from the middle circumferential main groove 1_{CE} and terminates within the land portion, in addition to the outer resonator 5. As mentioned above, when the land portion has a rib shape continuing in the tire circumferential direction, the grounding pressure is relatively high. Although the outer middle land portion 2_{OUT} is partitioned into block shapes by the outer resonator 5, since the outer resonator 5 is long in the tire circumferential direction, the outer middle land portion 2_{OUT} is preferably provided with a second thin groove 9 in order to more finely partition the outer middle land portion 2_{OUT} to optimize the rigidity. By this, the grounding pressure is reduced and the rigidity of the outer middle land portion 2_{OUT} is optimized, thereby further improving the wear performance. By moderately reducing the block rigidity, an effect of inhibiting deterioration of riding comfort or deterioration of tire noise can also be obtained.

The groove width of the second thin groove 9 is suitably 1.5 mm or smaller. The groove depth of the second thin groove 9 at the opening to the middle circumferential main groove 1_{CE} is preferably shallower than the maximum groove depth. By making the groove depth of the second thin groove 9 at the opening with respect to the middle circumferential main groove 1_{CE} shallow, the opening whose rigidity is likely to be low is reinforced, whereby the rigidity can be uniform and partial wear can be inhibited.

In the present invention, the outer middle land portion 2_{OUT} is further provided with a third thin groove (sipe) 10 which extends from the outer circumferential main groove 1_{OUT} and terminates within the land portion, which is also preferred. The outer middle land portion 2_{OUT} is provided with the third thin groove 10 to be more finely partitioned into block shapes in a similar manner to the case in which the second thin groove 9 is provided; and therefore the grounding pressure is reduced, and the rigidity is optimized, thereby obtaining an effect such as a further improvement of the wear performance.

The groove width of the third thin groove 10 is suitably 1.5 mm or smaller. The groove depth of the third thin groove 10 at the opening to the outer circumferential main groove 1_{OUT} is preferably shallower than the maximum groove depth. By making the groove depth of the third thin groove 10 at the opening with respect to the outer circumferential main groove 1_{OUT} shallow, the opening whose rigidity is likely to be low is reinforced, whereby the rigidity can be uniform and partial wear can be inhibited.

In the illustrated example, on an inner land portion 11_{IN} which is partitioned by the inner circumferential main groove 1_{IN} and positioned on the innermost side when installed in a vehicle, a sipe 12 which extends from the inner circumferential main groove 1_{IN} is arranged. The sipe 12 is composed of a portion which extends inclined with respect to the tire circumferential direction from the inner circumferential main groove 1_{IN} and a portion which extends along the tire circumferential direction. When, regarding a portion of the sipe 12 which extends along the tire circumferential direction, the portion is not continued in the tire circumferential direction and the sipe is partially not arranged, the compression rigidity can be optimized, whereby occurrence of a so-called heal-and-toe wear can be inhibited.

Round slots 14 each composed of a recessed portion having a conical shape, in the illustrated example, in three rows in the tire width direction as well as lateral grooves 13 are arranged on the inner land portion 11_{IN}. By arranging round slots 14, the rigidity in the rotation direction is secured while reducing road noise, and the partial wear resistance in the inner land portion 11_{IN} can be improved.

Further, on a buttress portion positioned outside a grounding edge defining a tread portion in the tire width direction, a plurality of recessed portions 15 each having a triangle planar shape are formed along the tire circumferential direction in order to reduce a road noise caused by a vibration of the buttress portion.

On the other hand, on an outer land portion 11_{OUT} which is partitioned by the outer circumferential main groove 1_{OUT} and positioned on the outermost side when installed in a vehicle, a plurality of sipes 17 as well as lateral grooves 16 are arranged.

The tire of the present invention is not particularly restricted as long as the tire tread portion is provided with the above-mentioned tread pattern, and other details such as inner structure of the tire may be appropriately designed as desired in accordance with a conventional method.

In the tire of the present invention, since the rigidity at the vicinity of the tire equatorial plane is high and this portion has excellent wear characteristics, an excellent wear performance is exhibited to a degree such that the tire can endure even when the tire is installed in a relatively high load vehicle such as an RV vehicle such as a minivan with a high center of gravity and a high load; and since the tire is provided with two resonators for reducing air column resonance in each main groove, the silent performance is also excellent.

In the tire of the present invention, a linear circumferential main groove extending in the tire circumferential direction is arranged. To the circumferential main groove, only a groove (for example, a groove having a groove width of 1.5 mm or smaller) having a narrow groove width such as a branch groove or thin groove is communicated and a sub groove or the like having a large groove width is not connected. The drainage performance of the circumferential main groove is high when water which flows in a groove is not disturbed. However, in the present invention, since a wide groove which disturbs the flow of water in a groove is not connected to the circumferential main groove, a drainage effect due to the circumferential main groove can favorably obtained. Further, in the tire of the present invention, since a land portion is arranged on the tire equatorial plane and a groove is not arranged at the vicinity of middle circumferential main groove 1_{CE} as little as possible as mentioned above, the rigidity at the vicinity of the tire equatorial plane can be retained at a moderately high level, whereby the handling response or steering stability can be favorably secured. Still further, since, in the pattern of the present invention, a thin groove or a branch groove is uniformly arranged on the whole tread portion, a portion where the rigidity is too high does not exist, thereby also securing favorable riding comfort.

### EXAMPLES

The present invention will be described in more detail with reference to Examples.

In accordance with specifications listed on the Table 1 below, a test tire of Example having a tread pattern as illustrated in Fig. 1 was manufactured in a tire size of 215/65R16. In the tread pattern, the groove width of each circumferential main groove was 9 mm; the groove width of each branch groove was 1.2 mm; and the groove width of each thin groove was 0.7 mm. The inclination angles of the first sub groove and the second sub groove with respect to the tire circumferential direction were 26 degrees and 30 degrees, respectively. The groove depth of the first thin groove provided on the inner middle land portion at the opening to the middle circumferential main groove was shallower than the maximum groove depth; and the groove depths of the second thin groove and the third thin groove provided on an outer middle land portion were shallower than the maximum groove depth at the opening to the middle circumferential main groove or the outer circumferential main groove. Further, the groove depths of the first sub groove at a communication portion where each branch groove communicated and at a middle portion along the extending direction were shallower than the maximum groove depth; and the groove depth of second sub groove at a communication portion where each branch groove communicated was shallower than the maximum groove depth.

In Comparative Example, a tire was manufactured in a similar manner to a tire of Example except that the tire comprised a tread pattern as illustrated in Fig. 1 of Patent Document 1.

Each of the obtained test tires was mounted on a rim to be applied inflated to an inner pressure of 230 kPa, and a load of 4.8 kN was applied thereto. In this state, evaluation was performed regarding the air column resonance noise level and wear performance.

### (Air column resonance noise level)

Each test tire was installed in a vehicle, and the vehicle on which two persons were seated was travelled in a test circuit course. The produced air column resonance sound was evaluated in ten-grade evaluation by feeling of the test driver. The larger the value, the lower the noise level, which is favorable.

### (Wear performance)

Each test tire was installed in a front-wheel-drive vehicle with a displacement of 3000 cc, and the vehicle on which two persons were seated was travelled on a general road for 5000 km. Then, the wear amount of each circumferential main groove was measured to calculate the average wear amount of the circumferential main groove. From the determined average wear amount, the lifetime from the start of use of each tire to the time when the remaining groove: 1.6 mm was determined. The result was indexed setting the lifetime of Comparative Example 100. The larger the index value the higher the wear performance.

These results are listed on the Table 1 below.

**[Table 1]**

| | Example | Comparative Example |
|---|---|---|
| air column resonance noise level (score) | 9 | 6 |
| wear performance (index) | 110 | 100 |

The result on the above Table 1, it is clear that, in a test tire comprising a tread pattern of the present invention, a favorable noise reducing effect is obtained while improving the wear performance compared with conventional one.

### DESCRIPTION OF SYMBOLS

- 1_{IN}: inner circumferential main groove
- 1_{CE}: middle circumferential main groove
- 1_{OUT}: outer circumferential main groove
- 2_{IN}: inner middle land portion
- 2_{OUT}: outer middle land portion
- 3: first sub groove
- 3A: one end of first sub groove
- 3B: other end of first sub groove
- 4a: first branch groove
- 4b: second branch groove
- 4c: third branch groove
- 5: outer resonator
- 6: second sub groove
- 6A: one end of second sub groove
- 6B: other end of second sub groove
- 7: inner resonator
- 8: first thin groove
- 9: second thin groove
- 10: third thin groove
- 11_{IN}: inner land portion
- 11_{OUT}: outer land portion
- 12, 17: sipe
- 13, 16: lateral groove
- 14: round slot
- 15: recessed portion

## Claims

1. A tire comprising, on a tread portion, three circumferential main grooves (1_{IN}, 1_{CE}, 1_{OUT}) composed of an outer circumferential main groove (1_{OUT}) positioned on the outermost side when installed in a vehicle, an inner circumferential main groove (1_{IN}) positioned on the innermost side when installed in a vehicle, and a middle circumferential main groove (1_{CE}) positioned therebetween, wherein an outer middle land portion (2_{OUT}) is defined by the middle circumferential main groove and the outer circumferential main groove, an inner middle land portion is defined by the middle circumferential main groove and the inner circumferential main groove, and the outer middle land portion is formed bridging across the tire equatorial plane, (CL), the outer middle land portion (2_{OUT}) comprises an outer resonator (5) composed of a first sub groove (3) both ends of which terminate within the land portion, a first branch groove (4a) which extends from one end of the first sub groove (3) to the outer circumferential main groove and whose groove width is smaller than that of the first sub groove, and a second branch groove (4b) which extends from the other end of the first sub groove to the middle circumferential main groove and whose groove width is smaller than that of the first sub groove, the inner middle land portion (2_{IN}) comprises a second sub groove (6) whose one end terminates within the land portion, wherein the other end of the second sub groove is directly communicated with the inner circumferential main groove or is communicated with the inner circumferential main groove via a third branch groove (4c) whose groove width is smaller than that of the second sub groove to form an inner resonator (7), and the length of the outer resonator (5) in the tire circumferential direction is larger than the length of the inner resonator (7) in the tire circumferential direction.

2. The tire according to claim 1, wherein the inner middle land portion comprises a first thin groove which extend from the middle circumferential main groove and terminates within the land portion, and the groove depth of the first thin groove at the opening thereof to the middle circumferential main groove is shallower than the maximum groove depth thereof.

3. The tire according to claim 1, wherein the outer middle land portion comprises a second thin groove which extends from the middle circumferential main groove and terminates within the land portion, and the groove depth of the second thin groove at the opening thereof to the middle circumferential main groove is shallower than the maximum groove depth thereof.

4. The tire according to claim 1, wherein, regarding each of the outer resonator and the inner resonator, adjacent resonators in the tire circumferential direction comprise an overlapping portion in the tire circumferential direction.

5. The tire according to claim 1, wherein the outer middle land portion comprises a third thin groove which extends from the outer circumferential main groove and terminates within the land portion, and the groove depth of the third thin groove at the opening thereof to the outer circumferential main groove is shallower than the maximum groove depth thereof.

6. The tire according to claim 1, wherein the groove depth of each of the first sub groove and the second sub groove at a communication portion where each branch groove communicates is shallower than the maximum groove depth thereof.

7. The tire according to claim 1, wherein the first sub groove and the second sub groove extend inclined with respect to the tire circumferential direction.

8. The tire according to claim 1, wherein the groove depth of the first sub groove at a middle portion thereof along the extending direction is shallower than the maximum groove depth thereof.

## Patentansprüche

1. Reifen, der auf einem Laufflächenabschnitt drei Umfangshauptnuten (1_{IN}, 1_{CE}, 1_{OUT}) umfasst, die sich zusammensetzen aus einer äußeren Umfangshauptnut (1_{OUT}), die bei Montage an einem Fahrzeug auf der äußersten Seite positioniert ist, einer inneren Umfangshauptnut (1_{IN}), die bei Montage an einem Fahrzeug auf der innersten Seite positioniert ist, und einer mittleren Umfangshauptnut (1_{CE}), die dazwischen positioniert ist, wobei
ein äußerer mittlerer Stegabschnitt (2_{OUT}) durch die mittlere Umfangshauptnut und die äußere Umfangshauptnut definiert ist, ein innerer mittlerer Stegabschnitt von der mittleren Umfangshauptnut und der inneren Umfangshauptnut definiert ist und der äußere mittlere Stegabschnitt durch Überbrücken der Reifenäquatorialebene, (CL), gebildet ist,
wobei der äußere mittlere Stegabschnitt (2_{OUT}) einen äußeren Resonator (5) umfasst, der zusammengesetzt ist aus einer ersten Unternut (3), deren beide Enden im Stegabschnitt enden, einer ersten Zweignut (4a), die sich von einem Ende der ersten Unternut (3) zur äußeren Umfangshauptnut erstreckt und deren Nutbreite kleiner ist als die der ersten Unternut, und einer zweiten Zweignut (4b), die sich vom anderen Ende der ersten Unternut zur mittleren Umfangshauptnut erstreckt und deren Nutbreite kleiner ist als die der ersten Unternut,
wobei der innere mittlere Stegabschnitt (2_{IN}) eine zweite Unternut (6) umfasst, deren eines Ende im Stegabschnitt endet, wobei das andere Ende der zweiten Unternut direkt mit der inneren Umfangshauptnut verbunden ist oder über eine dritte Zweignut (4c), deren Nutbreite kleiner ist als die der zweiten Unternut, um einen inneren Resonator (7) zu bilden, und die Länge des äußeren Resonators (5) in Reifenumfangsrichtung größer ist als die Länge des inneren Resonators (7) in Reifenumfangsrichtung.

2. Reifen nach Anspruch 1, wobei der innere mittlere Stegabschnitt eine erste dünne Nut umfasst, die sich von der mittleren Umfangshauptnut erstreckt und im Stegabschnitt endet, und die Nuttiefe der ersten dünnen Nut an der Öffnung davon zur mittleren Umfangshauptnut flacher ist als die maximale Nuttiefe davon.

3. Reifen nach Anspruch 1, wobei der äußere mittlere Stegabschnitt eine zweite dünne Nut umfasst, die sich von der mittleren Umfangshauptnut erstreckt und im Stegabschnitt endet, und die Nuttiefe der zweiten dünnen Nut an der Öffnung davon zur mittleren Umfangshauptnut flacher ist als die maximale Nuttiefe davon.

4. Reifen nach Anspruch 1, wobei hinsichtlich des äußeren Resonators und des inneren Resonators benachbarte Resonatoren in Reifenumfangsrichtung einen überlappenden Abschnitt in Reifenumfangsrichtung umfassen.

5. Reifen nach Anspruch 1, wobei der äußere mittlere Stegabschnitt eine dritte dünne Nut umfasst, die sich von der äußeren Umfangshauptnut erstreckt und im Stegabschnitt endet, und die Nuttiefe der dritten dünnen Nut an der Öffnung davon zur äußeren Umfangshauptnut flacher ist als die maximale Nuttiefe davon.

6. Reifen nach Anspruch 1, wobei die Nuttiefe der ersten Unternut und der zweiten Unternut an einem Verbindungsabschnitt, an dem jede Zweignut verbunden ist, flacher ist als die maximale Nuttiefe davon.

7. Reifen nach Anspruch 1, wobei die erste Unternut und die zweite Unternut sich bezogen auf die Reifenumfangsrichtung geneigt erstrecken.

8. Reifen nach Anspruch 1, wobei die Nuttiefe der ersten Unternut an einem mittleren Abschnitt davon entlang der Erstreckungsrichtung flacher ist als die maximale Nuttiefe davon.

## Revendications

1. Pneumatique comprenant, sur une partie bande de roulement, trois rainures principales circonférentielles (1_{IN}, 1_{CE}, 1_{OUT}) constituées d'une rainure principale circonférentielle extérieure (1_{OUT}) positionnée sur le côté le plus extérieur lorsque ledit pneumatique est monté sur un véhicule, d'une rainure principale circonférentielle intérieure (1_{IN}) positionnée sur le côté le plus intérieur lorsque ledit pneumatique est monté sur un véhicule, et d'une rainure principale circonférentielle médiane (1_{CE}) positionnée entre lesdites rainures, dans lequel
une partie d'appui médiane extérieure (2_{OUT}) est définie par la rainure principale circonférentielle médiane et la rainure principale circonférentielle extérieure, une partie d'appui médiane intérieure est définie par la rainure principale circonférentielle médiane et la rainure principale circonférentielle intérieure, et la partie d'appui médiane extérieure est formée en créant un pont dans le plan équatorial de pneumatique, (CL),
la partie d'appui médiane extérieure (2_{OUT}) comprend un résonateur externe (5) constitué d'une première sous-rainure (3) dont les deux extrémités se terminent dans la partie d'appui, d'une première rainure dérivée (4a) qui s'étend depuis une extrémité de la première sous-rainure (3) vers la rainure principale circonférentielle extérieure et dont une largeur de rainure est inférieure à celle de la première sous-rainure, et d'une deuxième rainure dérivée (4b) qui s'étend depuis l'autre extrémité de la première sous-rainure vers la rainure principale circonférentielle médiane et dont une largeur de rainure est inférieure à celle de la première sous-rainure,
la partie d'appui médiane intérieure (2_{IN}) comprend une deuxième sous-rainure (6) dont une extrémité se termine dans la partie d'appui, l'autre extrémité de la deuxième sous-rainure communiquant directement avec la rainure principale circonférentielle intérieure ou communiquant avec la rainure principale circonférentielle intérieure via une troisième rainure dérivée (4c) dont une largeur de rainure est inférieure à celle de la deuxième sous-rainure afin de former un résonateur intérieur (7), et la longueur du résonateur extérieur (5) dans la direction circonférentielle de pneumatique est supérieure à la longueur du résonateur intérieur (7) dans la direction circonférentielle de pneumatique.

2. Pneumatique selon la revendication 1, dans lequel la partie d'appui médiane intérieure comprend une première rainure fine qui s'étend à partir de la rainure principale circonférentielle médiane et se termine dans la partie d'appui, et la profondeur de rainure de la première rainure fine au niveau de l'ouverture de celle-ci débouchant sur la rainure principale circonférentielle médiane est moins profonde que la profondeur maximale de rainure de celle-ci.

3. Pneumatique selon la revendication 1, dans lequel la partie d'appui médiane extérieure comprend une deuxième rainure fine qui s'étend à partir de la rainure principale circonférentielle médiane et se termine dans la partie d'appui, et la profondeur de rainure de la deuxième rainure fine au niveau de l'ouverture de celle-ci débouchant sur la rainure principale circonférentielle médiane est moins profonde que la profondeur maximale de rainure de celle-ci.

4. Pneumatique selon la revendication 1, dans lequel, en ce qui concerne respectivement le résonateur extérieur et le résonateur intérieur, des résonateurs adjacents dans la direction circonférentielle de pneumatique comprennent une partie se chevauchant dans la direction circonférentielle de pneumatique.

5. Pneumatique selon la revendication 1, dans lequel la partie d'appui médiane extérieure comprend une troisième rainure fine qui s'étend à partir de la rainure principale circonférentielle extérieure et se termine dans la partie d'appui, et la profondeur de rainure de la troisième rainure fine au niveau de l'ouverture de celle-ci débouchant sur la rainure principale circonférentielle extérieure est moins profonde que la profondeur de rainure maximale de celle-ci.

6. Pneumatique selon la revendication 1, dans lequel la profondeur de rainure de chacune parmi la première sous-rainure et la deuxième sous-rainure au niveau d'une partie communication avec laquelle communique chaque rainure dérivée est moins profonde que la profondeur maximale de rainure de celle-ci.

7. Pneumatique selon la revendication 1, dans lequel la première sous-rainure et la deuxième sous-rainure s'étendent de manière inclinée par rapport à la direction circonférentielle de pneumatique.

8. Pneumatique selon la revendication 1, dans lequel la profondeur de rainure de la première sous-rainure au niveau d'une partie médiane de celle-ci le long de la direction d'extension est moins profonde que la profondeur maximale de rainure de celle-ci.
